# EUROPÄISCHE PATENTANMELDUNG

(11) **EP 3 047 877 A1**
(43) Veröffentlichungstag der Anmeldung: **27.07.2016**
(21) Anmeldenummer: 15152499.8
(22) Anmeldetag: 26.01.2015
(51) Int. Cl.: A62C 2/06, F16L 59/14, F16L 5/04

(54) **Brandschutzmanschette**

(71) Anmelder: M.D.S. Meyer GmbH, 49456 Bakum (DE)
(72) Erfinder: Thoben, Christian, 49456 Bakum (DE)
(74) Vertreter: Meyer, Ludgerus

(57) **Zusammenfassung**

Die Erfindung betrifft eine Brandschutzmanschette (2) mit einer ringförmigen Einlage eines intumeszierenden Materials (10) und einem die Einlage umspannenden auch bei Hitzeentwicklung formstabilen ringförmigen Wandungsteil (8), an dessen Innenseite die Einlage angeordnet ist. Erfindungsgemäß ist das intumeszierende Material (10) in einer Umhüllung (9) aus flexiblem und dehnbarem Material aufgenommen.

## Beschreibung

Die Erfindung betrifft eine Brandschutzmanschette mit einer Einlage eines intumeszierenden Materials nach dem Oberbegriff des Anspruchs 1.

Brandschutzmanschetten der betreffenden Art sind ein wichtiges Bauelement im Hochbau. Sie dienen insbesondere dazu, im Brandfall Durchbrüche in Wänden, durch die beispielsweise Rohre oder Kabel geführt sind, abzudichten. Damit lässt sich vermeiden, dass ein Brandereignis in einen angrenzenden Raum übertritt, wenn die durch Durchbrüche geführten Kabel oder Rohrleitungen aufgrund Hitzeeinwirkung schrumpfen und die Wanddurchbrüche öffnen können.

Dies liegt insbesondere dadurch begründet, dass Rohrleitungen bei Temperaturen von mehr als 120 - 150°C erweichen und dadurch einen Wanddurchbruch freigeben. Um dies zu vermeiden, werden häufig Brandschutzmanschetten verwendet, die eine Einlage aus intumeszierenden Material enthalten, das vor einem Wanddurchbruch um ein Rohr gewickelt und mittels einer Manschette zusammengehalten wird. Das intumeszierende Material der Brandschutzmanschette dehnt sich bei Temperaturen von > 120°C erheblich aus und drückt ein weich werdendes Rohr soweit zusammen, dass ein Branddurchtritt durch den Wanddurchbruch verhindert wird.

Es sind eine Reihe diverser Arten von Brandschutzmanschetten bekannt, die für derartige Zwecke einsetzbar sind. Im einfachsten Fall wird ein Streifen des intumeszierenden Materials mehrfach um ein Rohr im Bereich eines Wanddurchbruchs gewickelt.

Es ist auch bekannt, in eine Manschette innenseitig einen Streifen aus intumeszierenden Material einzulegen, und die Manschette dann um ein Rohr zu legen und ihre Enden miteinander zu verschrauben. Solche Brandschutzmanschetten können auch bei entsprechend vergrößertem Wanddurchbruch im Bereich des Wanddurchbruchs über das Rohr geschoben werden, so dass eine solche Manschette nicht vor die Wand zu setzen ist, insbesondere nicht auf beide Seiten der Wand, sondern im Wesentlichen unsichtbar innerhalb des Wanddurchbruchs angeordnet werden kann.

Aus der EP 1180 629 B1 ist eine Brandschutzmanschette bekannt, welche einen feuerfesten, gefalteten Gewebeschlauch enthält, in den das intumeszierende Material eingelegt ist, wobei der Gewebeschlauch mehrere umfängliche einseitig innenliegende Falten enthält, die durch einen im Brandfall schmelzenden oder abbrennenden Faden mit der Manschette verbunden sind und dadurch die Faltenbildung hervorgerufen.

Aus der DE 10 2011 089 532 A1 ist eine Brandschutzmanschette bekannt, bei der ein intumeszierendes Material als ein den Wanddurchbruch im Wesentlichen vollständig ausfüllender nachgiebig verformter Formkörper ausgebildet ist. Eine solche Brandschutzmanschette kommt insbesondere bei der Wanddurchführung von Kabeln zur Anwendung.

Aus der EP 2 505 232 A2 ist weiterhin eine Brandschutzmanschette bekannt, bei der das intumeszierende Material von einer flexiblen Matte umgeben ist, die um mindestens einen der Längsränder des Intumeszenzstreifens umgeschlagen ist, so dass der Mantel den Intumeszenzstreifen mindestens an einer Flachseite und einem der beiden Längsränder umgibt. Zur Verhinderung, dass die umgeschlagenen Streifen sich von den Intumeszenzstreifen ablösen, wird der Mantel mittels einer Naht oder auch Metallklammern mit dem Intumeszenzstreifen verbunden.

Während derartige Brandschutzmanschetten in nicht aktivem Zustand problemlos über viele Jahre am Einsatzort verbleiben können, ergeben sich im Brandfall Risiken dadurch, dass das Intumeszenzmaterial oder ein entsprechender Streifen fest in einem Gewebeschlauch oder einer festen Umhüllung eingekapselt ist. Eine feste Umhüllung führt dazu, dass bei erhöhter Temperatur und Ausdehnung des intumeszierenden Materials es innerhalb der Umhüllung zu einer Druckerhöhung kommt, die die Umhüllung oder das Schlauchgewebe explosionsartig aufreißen kann, so dass durch diese plötzliche Druckänderung das intumeszierende Material aus der Manschette herausfliegen und dann seine eigentliche Funktion nicht mehr erfüllen kann. Ein Weglassen der Umhüllung führt allerdings dazu, dass das üblicherweise körnig klebrige intumeszierende Material sich im Laufe der Zeit aus der Brandschutzmanschette unbemerkt herauslösen kann und in einem Brandfall nicht mehr ausreichend vorhanden ist.

Der Erfindung liegt daher die Aufgabe zugrunde, eine Brandschutzmanschette mit einer Einlage eines intumeszierenden Materials anzugeben, bei der das intumeszierende Material einerseits sicher und dauerhaft in der Wandschutzmanschette aufgenommen bleibt und andererseits im Brandfall eine sichere Abdichtung eines Wanddurchbruchs gewährleistet.

Diese Aufgabe wird durch die im Anspruch 1 angegebene Erfindung gelöst. Vorteilhafte Weiterbildungen der Erfindung sind in Unteransprüchen angegeben.

Eine Brandschutzmanschette der angegebenen Art enthält eine ringförmige Einlage eines intumeszierenden Materials und ein die Einlage umspannendes auch bei Hitzeentwicklung formstabiles ringförmiges Wandungsteil, an dessen Innenseite die Einlage angeordnet ist.

Gemäß den kennzeichnenden Merkmalen des Anspruchs 1 ist das intumeszierende Material in einer Umhüllung aus flexiblem und dehnbarem Material aufgenommen. Vorzugsweise ist das flexible und dehnbare Material Gummi oder dehnbares Kunststoffmaterial, dessen Schmelz- oder Flammtemperatur höher als die Aktivierungstemperatur des intumeszierenden Materials gewählt ist.

Die Eigenschaft der Umhüllung als flexibles Material erlaubt eine Verbesserung der Eigenschaften des intumeszierenden Materials mittels der Manschette und Anpassung an einen weiten Durchmesserbereich des zu umhüllenden Bauteils, insbesondere eines Rohres oder eines Kabelstrangs. Die Dehnbarkeit der Umhüllung führt dazu, dass sich im Brandfall der Druck des intumeszierenden Materials nur gering erhöht, so dass ein Zerreißen der Umhüllung vermieden wird. Wenn die Brandschutzmanschette ein Rohr aus PVC oder PE umgibt, wird dieses bei einer Temperatur von etwa 150°C weich, während sich das intumeszierende Material bereits bei geringerer Temperatur von etwa 120°C ausdehnt und dadurch Druck auf das eingeschlossene Rohr ausübt, ohne dass sich der Druck zur umgebenden Umhüllung zu stark erhöht. Bei Erweichung des Rohres drückt daher das intumeszierende Material das Rohr zusammen und verschließt damit die Öffnung eines Wanddurchbruchs. Die Dehnbarkeit der Umhüllung des intumeszierenden Materials führt dazu, dass das Material auch bei Erhitzung im Inneren der Umhüllung verbleibt und somit nicht nach außen austreten kann und u. U. unwirksam würde, wenn es aus der Brandschutzmanschette herausfließen würde. Die Dehnbarkeit der Umhüllung führt dazu, dass die Umhüllung über einen großen Druckbereich des sich ausdehnenden intumeszierenden Materials intakt bleibt. Ein Schmelzen oder das Entflammen der Umhüllung tritt bei der Verwendung von Gummi als Umhüllung erst bei Temperaturen von oberhalb 500°C auf.

Die Umhüllung ist in Umfangsrichtung vorzugweise geschlossen ausgebildet, so dass sich dadurch eine hohe Druckstabilität ergibt. Die Manschette kann ringförmig mit und ohne radiale Seitenflanken ausgebildet sein. Die Umhüllung kann auch U-förmig ausgebildet sein, wobei die offene Seite der Umhüllung gegen die Innenseite des umlaufenden Wandungsteils der Manschette gerichtet ist, wobei die Manschette dann vorzugsweise auf ihren beiden Stirnseiten radiale Seitenflansche aufweist, gegen die die Seiten der Umhüllung gerichtet sind. Damit lässt sich diese Umhüllung ebenfalls ausreichend verankern, ohne dass die Gefahr besteht, dass das intumeszierende Material stirnseitig aus der Brandschutzmanschette herausgedrückt werden könnte. Eine U-förmige Umhüllung des intumeszierenden Materials hat den Vorteil einer leichteren Einbringung des intumeszierenden Materials in die Umhüllung.

Die intumeszierende Einlage in der Umhüllung ist vorzugsweise als Streifenabschnitt hergestellt, der in die Umhüllung eingesetzt ist. Die Stirnseiten des Streifenabschnitts stoßen zur Bildung einer geschlossenen Ringform gegeneinander, um einen offenen Spalt zu verhindern. Alternativ können, insbesondere bei dünnen Streifen, ihre Enden überlappend angeordnet sein.

Die Erfindung betrifft auch ein intumeszierende Material zur Verwendung als Brandschutzmittel, das in einer flexiblen und dehnbaren im nicht erhitztem Zustand im Wesentlichen formstabilen Umhüllung aufgenommen ist und zur Verwendung als Einlage in einer Brandschutzmanschette nach Anspruch 1 verwendbar ist. Das intumeszierende Material ist insbesondere strangförmig hergestellt und von einer Umhüllung aus dehnbarem, flexiblem Material, insbesondere Gummi, umgeben. Die Einlage ist vorzugsweise rechteckförmig ausgebildet und als Streifen mit einer Dicke von 2 - 50 mm hergestellt. Die Einlage ist vorzugsweise in einer Umhüllung aus Gummi mit einer Wandstärke von 3 - 8 mm aufgenommen.

Die Erfindung wird nachstehend anhand eines Ausführungsbeispiels näher erläutert. Es zeigen:
- Fig. 1: eine teilgeschnittene Ansicht eines Rohres mit einer Brandschutzmanschette,
- Fig. 2: eine Querschnittsansicht durch ein Rohr mit einer Brandschutzmanschette,
- Fig. 3: ein ummanteltes intumeszierendes Material, und
- Fig. 4: ein in eine Manschette eingelegter teilummantelter Streifen eines intumeszierenden Materials.

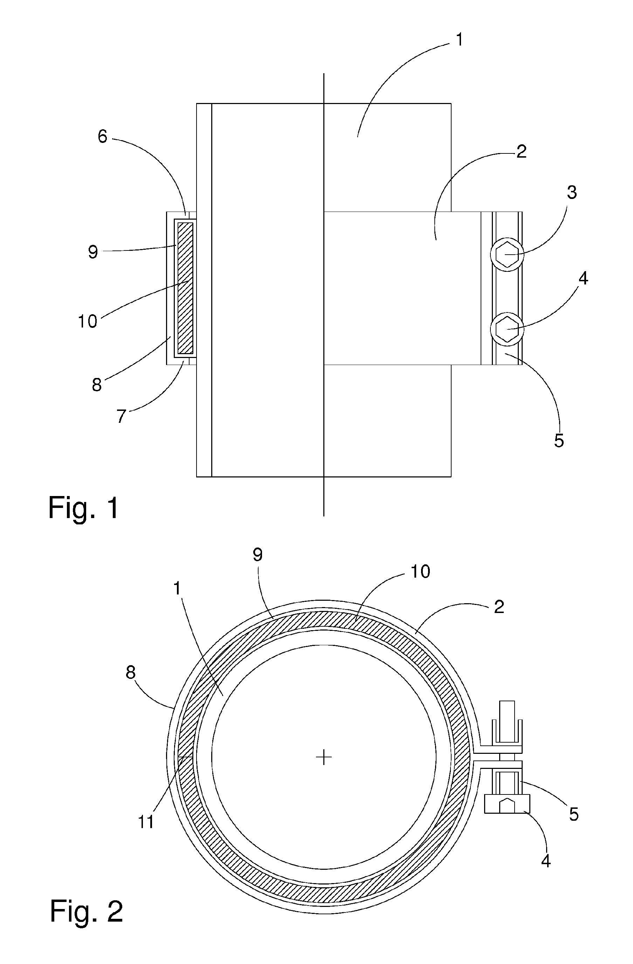

In Fig. 1 ist eine Rohrleitung 1 gezeigt, bei der es sich um eine übliche Abwasserleitung in Gebäuden handeln kann, die durch eine Wand oder eine Decke geführt ist. Die Rohrleitung 1 weist eine metallische Manschette 2 auf, die um die Rohrleitung 1 herumgeführt ist, und mittels Schrauben 3, 4 über eine Schiene 5 am Umfang der Rohrleitung 1 befestigt ist. Die Manschette 2 befindet sich üblicherweise auf einer oder beiden Seiten einer zu schützenden Wand oder Decke, durch die die Rohrleitung 1 hindurchgeführt wird. Die Manschette kann jedoch auch direkt im Bereich des Durchbruchs durch eine Wand oder Decke angeordnet sein, so dass zum beidseitigen Schutz einer Decke oder Wand lediglich eine Brandschutzmanschette erforderlich ist.

Die Brandschutzmanschette 2 weist ein axial gerichtetes Wandungsteil 8 auf, das die Rohrleitung vollständig umgibt und in Flanschen endet, die durch die Schiene 5 und die Schrauben 3, 4 an der Rohrleitung 1 befestigbar ist.

Das Wandungsteil 8 der Manschette 2 weist auch stirnseitige Schenkel 6, 7 auf, die radial zur Rohrleitung 1 gerichtet sind, wodurch sich ein Freiraum zwischen der Rohrleitung 1, den Schenkeln 6, 7 und dem Wandungsteil 8 ergibt, in den ein Streifen eines intumeszierenden Materials 10 eingelegt ist. Das Material 10 ist seinerseits in eine mantelförmige den Streifen 10 umschließende Umhüllung 9 eingelegt, die die Rohrleitung 1 vollständig umgibt. Die Ummantelung 9 besteht aus kautschukartigem Material, insbesondere Gummi. Sie kann auch aus Kunststoffmaterial bestehen, wenn es mit Gummi vergleichbare Eigenschaften aufweist. Die Umhüllung 9 ist einerseits flexibel und aufgrund ihrer Materialeigenschaften stark dehnbar.

Bei einer Hitzeeinwirkung auf die Rohrleitung, z. B. durch Feuer oder stark erhöhten Temperaturen von z. B. mehr als 120°C, beginnt das intumeszierende Material, das als solches bekannt ist, sich nach Art von Bauschaum erheblich auszudehnen und übt damit erheblichen radialen Druck auf die Rohrleitung 1 aus. Das Material der Rohrleitung 1 verformt sich ab 150°C etwa durch den ausgeübten Druck des intumeszierenden Materials radial nach innen und verschließt sich im Wesentlichen vollständig, so dass sich damit ein Verschluss des Wanddurchbruchs ergibt.

Da die stirnseitigen Schenkel 6, 7 der Brandschutzmanschette das intumeszierende Material in Axialrichtung des Rohres nur in nicht eingedrücktem Zustand der Rohrleitung weitgehend abschließen, würde die Gefahr bestehen, dass das intumeszierende Material ohne Absicherung in Axialrichtung durch den Radialdruck aus der Brandschutzmanschette herausgetrieben würde und die Aufgabe, die Rohrleitung radial zu verschließen, nicht ausreichend erfüllen könnte. Daher sieht die Erfindung vor, dass das intumeszierende Material von einer Umhüllung aus Gummi oder gummiartigem Material umgeben ist, die das intumeszierende Material beim Ausdehnen daran hindert, in Axialrichtung der Rohrleitung aus der Brandschutzmanschette herauszutreten. Der Radialdruck des intumeszierenden Materials bleibt trotz der Umhüllung im Wesentlichen unbeeinflusst.

Fig. 2 zeigt einen Querschnitt durch eine Brandschutzmanschette nach Fig. 1. Es ist gezeigt, wie das Wandungsteil 8 den Streifen des intumeszierenden Materials 10 einschließt und über die Schraubverbindung 4 verklemmt. Das intumeszierende Material 10 ist in einer Umhüllung 9 aus Gummi oder gummiartigem Material aufgenommen. Bei einer Ausdehnung des intumeszierenden Materials 10, das aufgrund der formstabilen Ausbildung des Wandungsteils 8 aus Metall sich nur nach innen ausdehnen kann, wird die Wandung der Rohrleitung 1 zusammengedrückt, bis der Querschnitt der Rohrleitung 1 im Wesentlichen verschlossen ist.

Vorzugsweise wird das intumeszierende Material als Streifen hergestellt, das zusammen mit der Umhüllung 9 in die Brandschutzmanschette eingelegt wird. Die stirnseitigen Enden des Streifens stoßen an dem Spalt 11 gegeneinander.

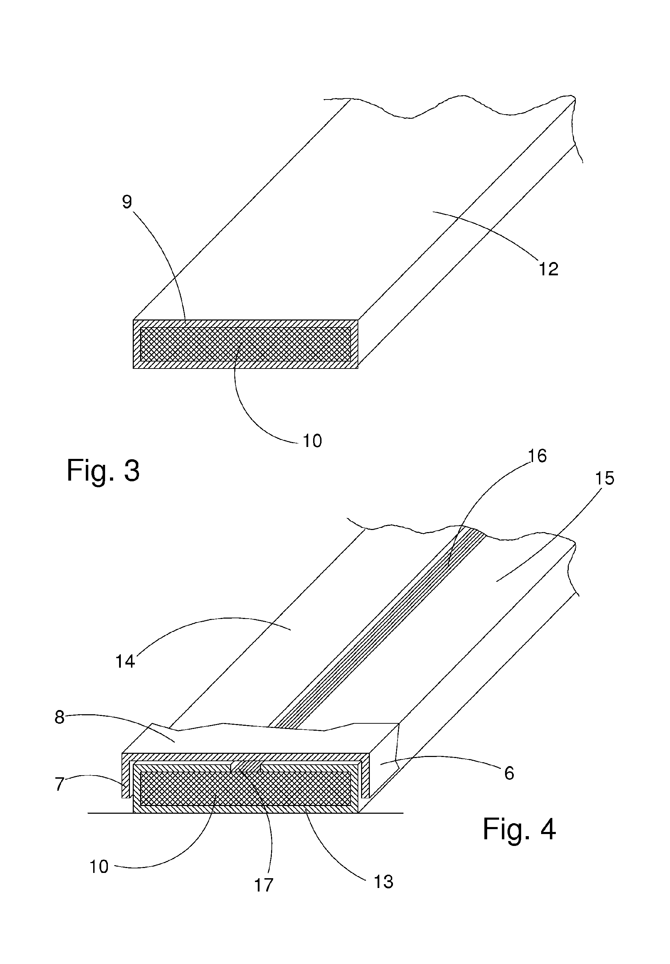

In Fig. 3 ist ein entsprechend hergestellter Streifen 12 dargestellt, dessen Umhüllung 9 das intumeszierende Material 10 aufnimmt.

Fig. 4 zeigt die Einbringung des intumeszierenden Materials in eine Manschette mit einem Wandungsteil 8 und seitlichen Schenkeln 6, 7. In der hier dargestellten Ausführungsform ist die Umhüllung 13 nicht vollständig geschlossen, sondern lässt in Längsrichtung einen schmalen Freiraum 17, durch den die Oberseite 16 des intumeszierenden Materials 10 erkennbar bleibt. Diese Ausführungsform erleichtert die Einbringung des intumeszierenden Materials in den Streifen, wobei auf diese Weise das intumeszierende Material auf eine Bahn einer Umhüllung aufgelegt werden kann und durch Umlegen der Umschläge 14, 15 sich eine im Wesentlichen geschlossene Umhüllung ergibt. Da der Freiraum 17 sich an der Innenseite des Wandungsteils 8 der Manschette befindet und die Schenkel 6, 7 eine seitliche Ausdehnung der Umhüllung 13 verhindern, bleibt die Funktion der Umhüllung, das intumeszierende Material 10 bei Ausdehnung radial zur Rohrleitung 1 am axialen Ausdehnen zu hindern, erhalten.

Das Ansprechen des intumeszierenden Materials 10 auf eine Temperaturerhöhung hängt auch von dem Wärmedurchgangskoeffizienten des intumeszierenden Materials 10 ab. Um die erhöhte Hitze schneller in das intumeszierende Material einbringen zu können, kann vorgesehen sein, das Material durch Metallschienen, Metallgitter oder Metallsplitter zu ergänzen, die schnell auf Temperatureinflüsse reagieren. Ferner können von der Manschette ausgehend Metallstifte in das intumeszierende Material eindringen, die eine schnelle Hitzeweiterleitung in das Material ermöglichen.

### Bezugszeichen

- 1: Rohrleitung
- 2: Manschette
- 3: Schraube
- 4: Schraube
- 5: Schiene
- 6: Schenkel
- 7: Schenkel
- 8: Wandungsteil
- 9: Umhüllung
- 10: intumeszierendes Material
- 11: Spalt
- 12: Streifen
- 13: Umhüllung
- 14: Umschlag
- 15: Umschlag
- 16: Oberseite
- 17: Freiraum

## Patentansprüche

1. Brandschutzmanschette (2) mit einer ringförmigen Einlage eines intumeszierenden Materials (10) und einem die Einlage umspannenden auch bei Hitzeentwicklung formstabilen ringförmigen Wandungsteil (8), an dessen Innenseite die Einlage angeordnet ist, **dadurch gekennzeichnet, dass** das intumeszierende Material (10) in einer Umhüllung (9) aus flexiblem und dehnbarem Material aufgenommen ist.

2. Brandschutzmanschette (2) nach Anspruch 1, **dadurch gekennzeichnet, dass** die Umhüllung (9) aus kautschukartigem Material, insbesondere Gummi, oder dehnbarem Kunststoffmaterial gebildet ist, dessen Schmelz- oder Flammtemperatur höher als die Aktivierungstemperatur des intumeszierenden Materials (10) gewählt ist.

3. Brandschutzmanschette (2) nach Anspruch 1, **dadurch gekennzeichnet, dass** die Umhüllung (9) in Umfangsrichtung geschlossen ausgebildet ist.

4. Brandschutzmanschette (2) nach Anspruch 1, **dadurch gekennzeichnet, dass** die Umhüllung (9) im nichterhitzten Zustand formstabil ausgebildet ist.

5. Brandschutzmanschette (2) nach Anspruch 1, **dadurch gekennzeichnet, dass** die Einlage als Streifenabschnitt (12) ausgebildet ist, der in das Wandungsteil (8) eingesetzt ist, wobei die Stirnseiten des Streifenabschnitts (12) zur Bildung einer geschlossenen Ringform gegeneinander anstoßen.

6. Brandschutzmanschette (2) nach Anspruch 1, **dadurch gekennzeichnet, dass** die Umhüllung (9) das intumeszierende Material (10) U-förmig umfasst, wobei die offene Seite der Umhüllung (9) gegen die Innenseite des Wandungsteils (8) gerichtet ist und die Seitenflanken der Umhüllung (9) gegen Schenkel (6, 7) des Wandungsteils (8) gerichtet sind.

7. Brandschutzmanschette (2) nach Anspruch 1, **dadurch gekennzeichnet, dass** von dem Wandungsteil radial gerichtete oder von dessen radialen Schenkeln ausgehend axial gerichtete Metallstäbe in die Einlage eindringen.

8. Intumeszierendes Material (10) zur Verwendung als Brandschutzmittel, insbesondere in einer Brandschutzmanschette (2), das in einer flexiblen und dehnbaren im nichterhitzten Zustand im Wesentlichen formstabilen Umhüllung (9) aufgenommen ist, zur Verwendung als Einlage in einer Brandschutzmanschette (2) nach Anspruch 1.

9. Intumeszierendes Material (10) nach Anspruch 8, **dadurch gekennzeichnet, dass** es strangförmig herstellt ist und von einer Umhüllung (9) aus dehnbarem flexiblem Material, insbesondere Gummi, umgeben ist.

10. Intumeszierendes Material (10) nach Anspruch 8, **dadurch gekennzeichnet, dass** die Einlage im Querschnitt rechteckförmig ausgebildet ist und die Umhüllung (9) eine Wandstärke von 3 - 8 mm aufweist.
